# EUROPEAN PATENT APPLICATION

(11) **EP 1 862 847 A1**
(43) Date of publication of application: **05.12.2007**
(21) Application number: 05721098.1
(22) Date of filing: 18.03.2005
(51) Int. Cl.: G02F 1/1347, G02F 1/1345

(54) **DISPLAY DEVICE AND MANUFACTURING METHOD THEREOF**

(71) Applicant: Fujitsu Ltd., Kawasaki-shi, Kanagawa 211-8588 (JP)
(72) Inventor: KUROSAKI, Yoshihisa FUJITSU LIMITED, Kawasaki-shi, Kanagawa 2118588 (JP); TOMITA, Junji FUJITSU LIMITED, Kawasaki-shi, Kanagawa 2118588 (JP); NOSE, Masaki FUJITSU LIMITED, Kawasaki-shi, Kanagawa 2118588 (JP)
(74) Representative: Holtby, Christopher Lawrence
(86) International application number: PCT/JP2005/004911
(87) International publication number: WO 2006/100711

(57) **Abstract**

The present invention has an object of proposing a non-conventional, novel method for reducing the number of scanning driver circuits used with respect to a display unit having a stacked display panel and a method of manufacturing the same.

The present invention relates to a display unit having a stacked display panel, the display unit including first and second end display panels placed at both ends; and one or more internal display panels placed between the first and second end display panels, wherein the first end display panel includes a scan electrode terminal longer than scan electrode terminals of the internal display panels and shorter than a scan electrode terminal of the second end display panel, and the terminal surfaces of the scan electrode terminals in the first and second end display panels oppose each other; the scan electrode terminal of each of the internal display panels is joined to the scan electrode terminal of one of the first end display panel, the second end display panel, and another one of the internal display panels; the scan electrode terminal of the first end display panel is joined to the scan electrode terminal of the second end display panel; and the scan electrode terminal of the second end display panel is connected to a scanning driver circuit.

## Description

### TECHNICAL FIELD

The present invention relates to display units such as electronic paper and flat panel displays and methods of manufacturing the same.

### BACKGROUND ART

In these years, electronic paper has drawn attention as an alternative information medium to paper. Electronic paper is an electronic information medium that can be bent, rolled, and carried like paper. Display systems for electronic paper include liquid crystal systems and electrophoretic systems. There are challenges such as improvement in visibility and improvement in power efficiency in putting electronic paper to practical use.

It is known that "reflection-type" display units using reflected light in displaying are better in visibility than "transmission-type" display units using transmitted light in displaying. Further, the power efficiency of a display unit is increased by employment of a display element having a "memory characteristic" that causes the contents of a display to be maintained even when power is switched from ON to OFF. Therefore, electronic paper using a cholesteric liquid crystal, which is a reflection type and has a memory characteristic, has drawn attention (Patent Document 3).
Patent Document 1: Japanese Laid-Open Patent Application No. 2000-241828
Patent Document 2: m Japanese Laid-Open Patent Application. No. 2002-72244
Patent Document 3: Japanese Laid-Open Patent Application No. 2003-195261

### DISCLOSURE OF THE INVENTION

### PROBLEMS TO BE SOLVED BY THE INVENTION

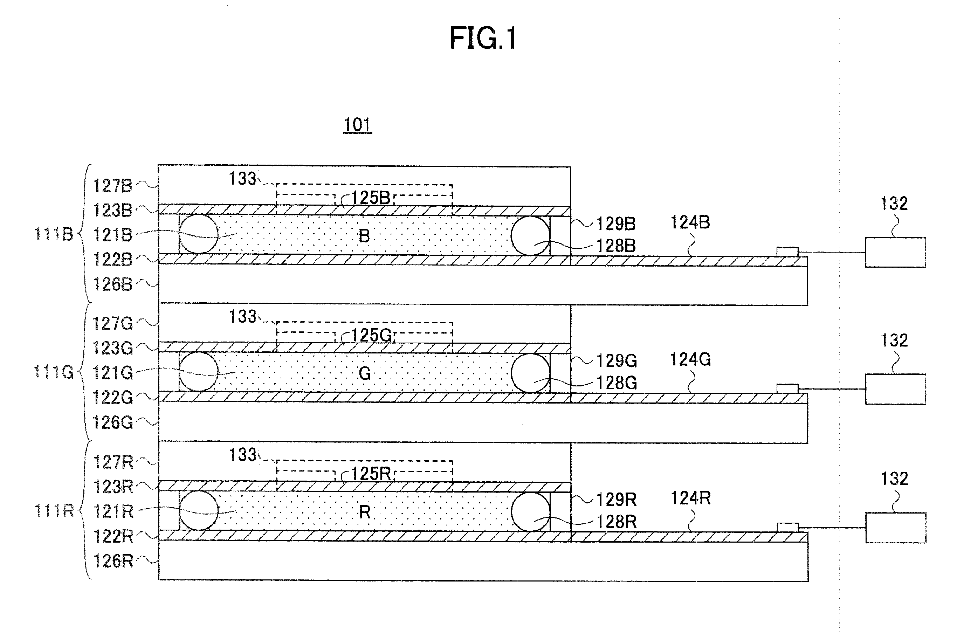

FIG. 1 shows a conventional display unit 101 using a cholesteric liquid crystal. The display unit 101 of FIG. 1 has a stacked display panel including a red display panel 111R, a green display panel 111G, and a blue display panel 111B. Each display panel 111 includes a display layer 121, a scan electrode 122, a signal electrode 123, a scan electrode terminal 124, a signal electrode terminal 125, a scan electrode substrate 126, a signal electrode substrate 127, a spacer 128, and a sealing material 129.

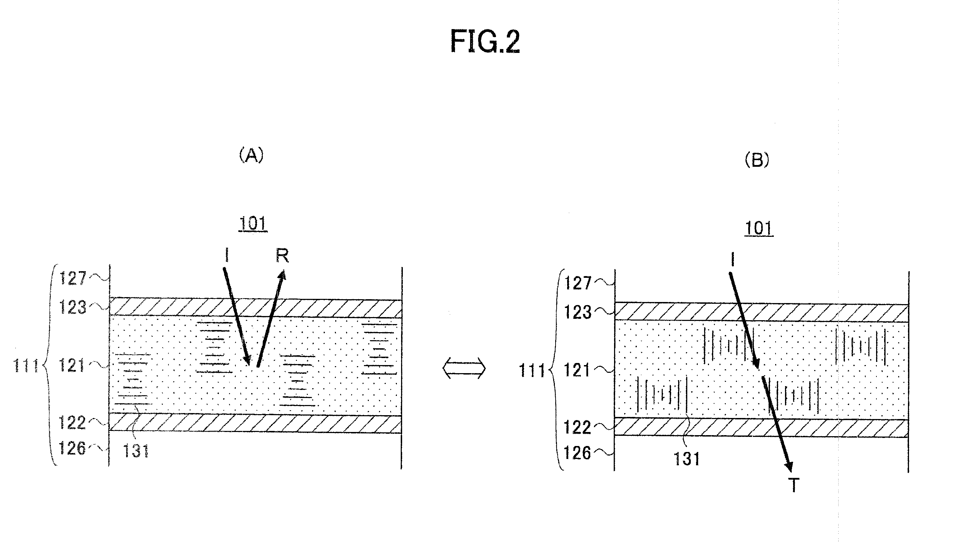

FIG. 2 is a diagram illustrating the principle of displaying of the display unit 101 using a cholesteric liquid crystal. Application of a strong pulse voltage between the electrodes of the display layer 121 causes a planar state where the screw axes of liquid crystal molecules 131 of the cholesteric liquid crystal are perpendicular to the surfaces of the electrodes as shown in FIG. 2A. Application of a weak pulse voltage between the electrodes of the display layer 121 causes a focal conic state where the screw axes of the liquid crystal molecules 131 of the cholesteric liquid crystal are parallel to the surfaces of the electrodes as shown in FIG. 2B. A planar-state cholesteric liquid crystal has the property of reflecting incident light of a specific wavelength as from arrow I to arrow R in the drawing (selective reflection). A focal conic-state cholesteric liquid crystal has the property of transmitting incident light of various wavelengths such as from arrow I to arrow T in the drawing. The display unit 101 using a cholesteric liquid crystal realizes ON and OFF of display with reflection and transmission of incident light.

Three scanning drivers 132 and three signal drivers 133 are mounted on the display unit 101 of FIG. 1 for the three display panels 111. The single scanning driver 132 is connected to the scan electrode terminal 124 of each display panel 111, and the single signal driver 133 is connected to the signal electrode terminal 125 of each display panel 111.

The signal drivers 133 and the scanning drivers 132 contribute to an increase in the cost of the display panels 111. Therefore, while the signal driver 133 should be provided for each display panel 111, the scanning driver 132 does not have to be provided for every display panel 111. Accordingly, it is convenient if it is possible to reduce the number of scanning drivers 132 used by enabling two or more of the display panels 111 to share the single scanning driver 132.

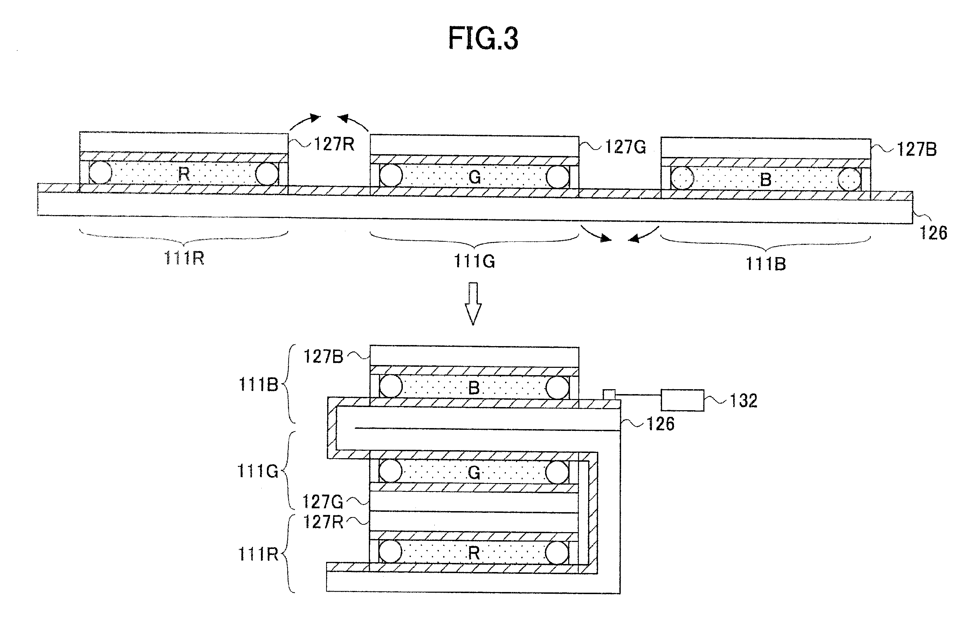

In Patent Document 1, the three display panels 111 share the single scan electrode substrate 126, and the laminated structure of the three display panels 111 is realized by folding the scan electrode substrate 126 as shown in FIG. 3. In this case, the number of scanning drivers 132 used is reduced to one, but there are the display panel 111B near the scanning driver 132 and the display panels 111G and 111R far from the scanning driver 132. As a result, a rather high scan voltage should be set in consideration of a voltage drop due to the electric resistance of from the near display panel 111B up to the far display panels 111G and 111R.

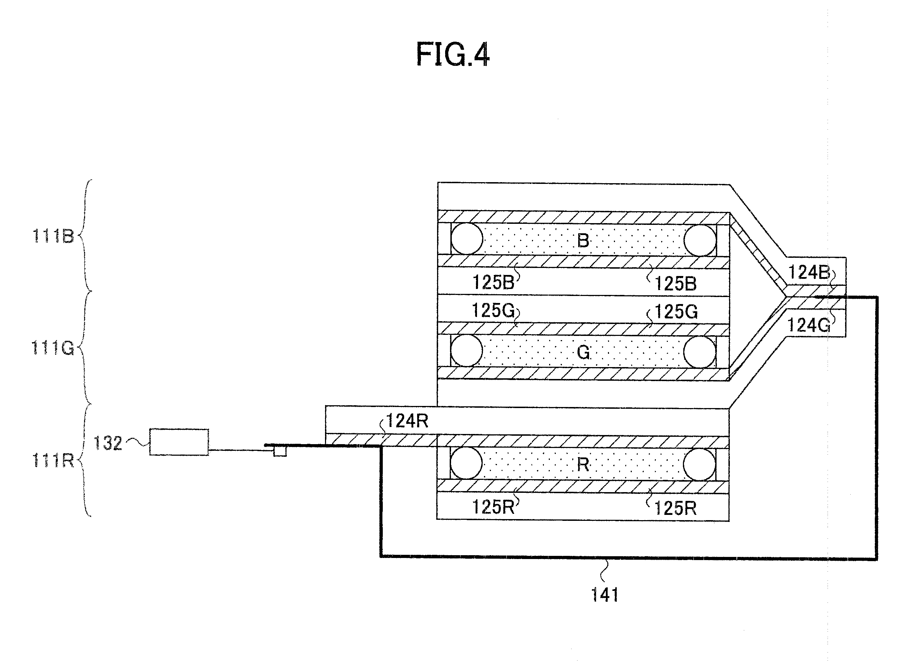

In Patent Document 2, the scan electrode terminal 124R of the display panel 111R is connected indirectly through a dedicated flexible printed board 141 to where the scan electrode terminal 124B of the display panel 111B and the scan electrode terminal 124G of the display panel 111G are joined as shown in FIG. 4. In this case also, although the number of scanning drivers 132 used is reduced to one, there are the display panel 111R near the scanning driver 132 and the display panels 111G and 111B far from the scanning driver 132. As a result, a rather high scan voltage should be set in consideration of a voltage drop due to the electric resistance of from the near display panel 111R up to the far display panels 111G and 111B. Further, the cost of preparing the dedicated flexible printed board 141 also becomes a problem.

The present invention has an object of proposing a non-conventional, novel method for reducing the number of scanning driver circuits used with respect to a display unit having a stacked display panel and a method of manufacturing the same.

### MEANS FOR SOLVING THE PROBLEMS

The present invention relates to a display unit having a stacked display panel, the display unit including a first end display panel placed at one end; a second end display panel placed at another end; and one or more internal display panels placed between the first end display panel and the second end display panel, wherein the first end display panel includes a scan electrode terminal longer than scan electrode terminals of the internal display panels, and the second end display panel includes a scan electrode terminal longer than the scan electrode terminal of the first end display panel, and a terminal surface of the scan electrode terminal in the first end display panel faces a terminal surface of the scan electrode terminal in the second end display panel; the scan electrode terminal of each of the internal display panels is joined to the scan electrode terminal of one of the first end display panel, the second end display panel, and another one of the internal display panels; the scan electrode terminal of the first end display panel is joined to the scan electrode terminal of the second end display panel; and the scan electrode terminal of the second end display panel is connected to a scanning driver circuit.

The present invention relates to a method of manufacturing a display unit having a stacked display panel, the display unit including a first end display panel placed at one end; a second end display panel placed at another end; and one or more internal display panels placed between the first end display panel and the second end display panel, the first end display panel including a scan electrode terminal longer than scan electrode terminals of the internal display panels, the second end display panel including a scan electrode terminal longer than the scan electrode terminal of the first end display panel, the method including causing a terminal surface of the scan electrode terminal in the first end display panel to face a terminal surface of the scan electrode terminal in the second end display panel; joining the scan electrode terminal of each of the internal display panels to the scan electrode terminal of one of the first end display panel, the second end display panel, and another one of the internal display panels; joining the scan electrode terminal of the first end display panel to the scan electrode terminal of the second end display panel; and connecting the scan electrode terminal of the second end display panel to a scanning driver circuit.

### EFFECTS OF THE INVENTION

The present invention proposes a non-conventional, novel method for reducing the number of scanning driver circuits used with respect to a display unit having a stacked display panel and a method of manufacturing the same.

### BRIEF DESCRIPTION OF THE DRAWINGS

FIG. 1 shows a conventional display unit using a cholesteric liquid crystal.
FIG. 2 is a diagram illustrating the principle of displaying of the display unit using the cholesteric liquid crystal.
FIG. 3 is a diagram for illustrating a method disclosed in Patent Document 1.
FIG. 4 is a diagram for illustrating a method disclosed in Patent Document 2.
FIG. 5 shows an embodiment of a display unit using a cholesteric liquid crystal.
FIG. 6 shows matrix-driving electrodes and segment-driving electrodes.
FIG. 7 is a front view of a display panel.
FIG. 8 is a perspective view of a laminated structure of the display panels.
FIG. 9 is a diagram for illustrating input images and output images of signal drivers.
FIG. 10 shows a variant embodiment of the display unit using the cholesteric liquid crystal.
FIG. 11 shows a variant embodiment of the display unit using the cholesteric liquid crystal.
FIG. 12 shows a variant embodiment of the display unit using the cholesteric liquid crystal.
FIG. 13 is a diagram illustrating a method of manufacturing the display unit having the display panels in three layers.
FIG. 14A is a diagram illustrating a method of manufacturing the display unit having the display panels in four layers.
FIG. 14B is a diagram illustrating the method of manufacturing the display unit having the display panels in four layers.
FIG. 15A is a diagram illustrating a method of manufacturing the display unit having the display panels in five layers.
FIG. 15B is a diagram illustrating the method of manufacturing the display unit having the display panels in five layers.
FIG. 16A is a diagram illustrating a method of manufacturing the display unit having the display panels in six layers.
FIG. 16B is a diagram illustrating the method of manufacturing the display unit having the display panels in six layers.
FIG. 17 is a flowchart for illustrating the methods of manufacturing the display unit using the cholesteric liquid crystal.

### DESCRIPTION OF THE REFERENCE NUMERALS

101 display unit
111 display panel
121 display layer
122 scan electrode
123 signal electrode
124 scan electrode terminal
125 signal electrode terminal
126 scan electrode substrate
127 signal electrode substrate
128 spacer
129 sealing material
131 liquid crystal molecule
132 scanning driver
133 signal driver
134 anisotropic conductive adhesive agent
141 dedicated flexible printed board
151 input image
152 output image
153 display image
161 image processing IC

### BEST MODE FOR CARRYING OUT THE INVENTION

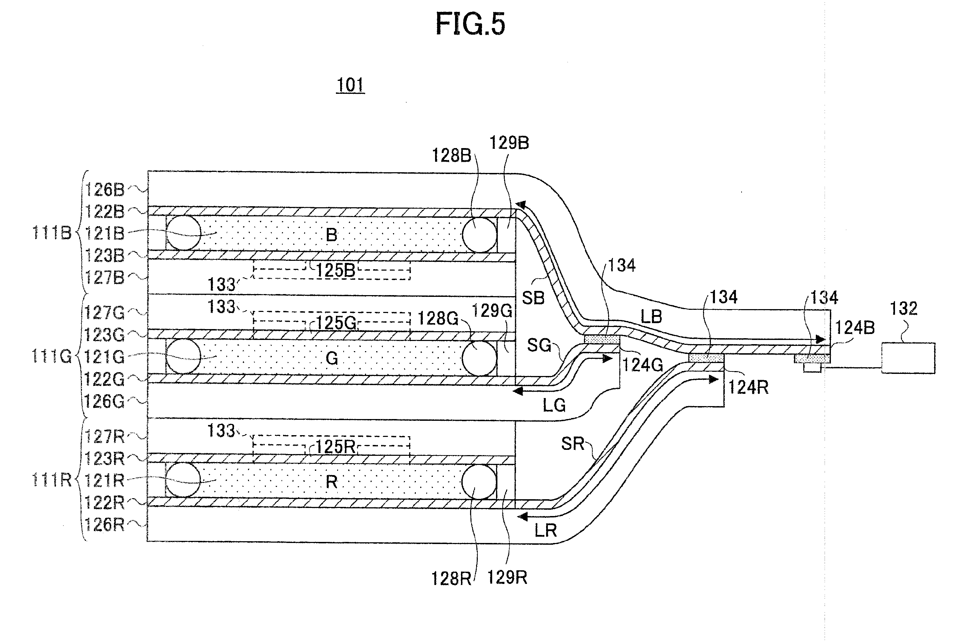

FIG. 5 shows an embodiment of a display unit 101 using a cholesteric liquid crystal. The display unit 101 of FIG. 5 has a stacked display panel including a red display panel 111R, a green display panel 111G, and a blue display panel 111B. Each display panel 111 includes a display layer 121, a scan electrode 122, a signal electrode 123, a scan electrode terminal 124, a signal electrode terminal 125, a scan electrode substrate 126, a signal electrode substrate 127, a spacer 128, and a sealing material 129.

The display layer 121 is a liquid crystal layer formed of a liquid crystal forming a cholesteric phase. The display layer 121 may be a liquid crystal layer formed principally of a cholesteric liquid crystal or a liquid crystal layer formed of a nematic liquid crystal containing a cholesteric liquid crystal (a chiral dopant). As a result, a reflection-type display layer (display unit) having a memory characteristic is realized, so that improvement in the visibility and improvement in the power efficiency of electronic paper are realized.

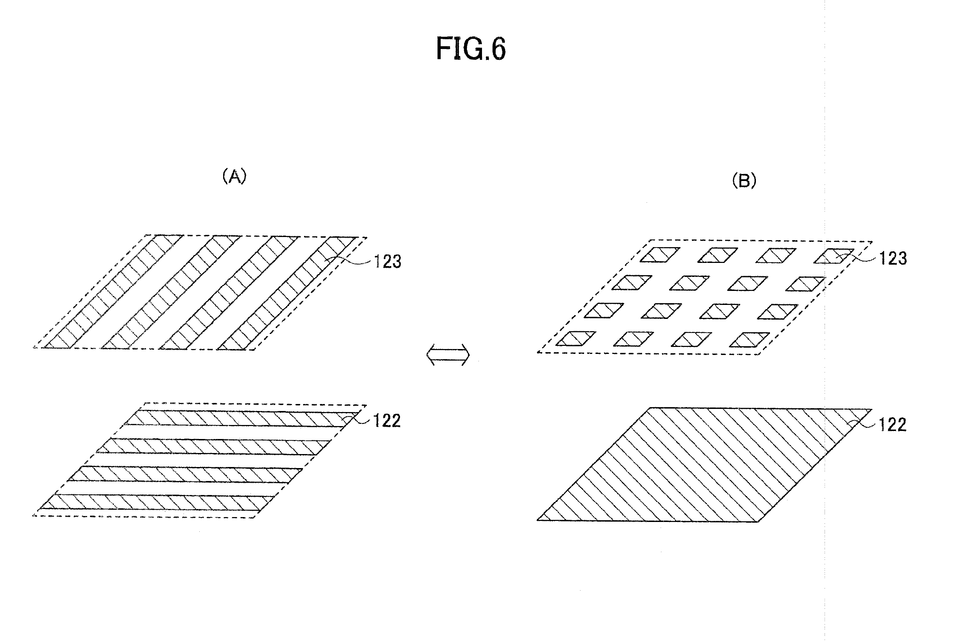

The scan electrode 122 is a transparent electrode for applying a scan voltage to the display layer 121. The signal electrode 123 is a transparent electrode for applying a signal voltage (data voltage) to the display layer 121. Here, the scan electrode 122 and the signal electrode 123 are matrix-driving electrodes (FIG. 6A), but may also be segments-driving electrodes (FIG. 6B). The scan electrode 122 and the signal electrode 123 are IZO (Indium-Zinc-Oxide) electrodes, but may also be ITO (Indium-Tin-Oxide) electrodes.

The scan electrode terminal 124 is a terminal for connecting the scan electrode 122 and the scanning driver 132. The signal electrode terminal 125 is a terminal for connecting the signal electrode 123 and the signal driver 133. The scan electrode terminal 124 and the signal electrode terminal 125 are IZO electrodes, but may also be ITO electrodes.

The scan electrode substrate 126 is a transparent, flexible substrate on which the scan electrode 122 and the scan electrode terminal 124 are formed. The signal electrode substrate 127 is a transparent, flexible substrate on which the signal electrode 123 and the signal electrode terminal 125 are formed. The scan electrode substrate 126 and the signal electrode substrate 127 are flexible substrates that can be bent and rolled, thereby realizing flexible electronic paper that can be bent and rolled. Here, the scan electrode substrate 126 and the signal electrode substrate 127 are polycarbonate printed boards.

The scanning driver 132 and the signal drivers 133 are mounted on the display unit 101 of FIG. 5. The scanning driver 132 is a driver circuit for supplying scan voltage to the display panels 111 (display layers 121). The signal drivers 133 are driver circuits for supplying signal voltage to the display panels 111 (display layers 121). The scanning driver 132 and the signal drivers 133 are 1C chips that are contained in IC packages by a surface mounting format such as a TCP (Tape Carrier Package) format. As a result, the scanning driver 132 and the signal 1 drivers 133 are reduced in thickness, so that electronic paper is reduced in thickness.

The single scanning driver 132 and the three signal drivers 133 are mounted on the display unit 101. The scanning driver 132 is common to all the display panels 111, while the signal drivers 133 are provided individually for the corresponding display panels 111.

A description is given below of the laminated structure of the display panels 111.

In the display unit 101 of FIG. 5, the red (R) display panel 111R, the green (G) display panel 111G, and the blue (B) display panel 111B are stacked. The display panel 111R is placed at a "lower layer," which defines one end; the display panel 111B is placed at an "upper layer," which defines another end; and the display panel 111G is placed at the "intermediate layer" between the display panel 111R and the display panel 111B.

In the display unit 101 of FIG. 5, a terminal surface SR of the scan electrode terminal 124R in the lower-layer display panel 111R faces a terminal surface SB of the scan electrode terminal 124B in the upper-layer display panel 111B. This is for bonding the scan electrode terminal 124R of the lower-layer display panel 111R to the scan electrode terminal 124B of the upper-layer display panel 111B with an anisotropic conductive adhesive agent 134 as shown in FIG. 5. Therefore, a length LR of the scan electrode terminal 124R in the lower-layer display panel 111R and a length LB of the scan electrode terminal 124B in the upper-layer display panel 111B are both greater than a length of the scan electrode terminal 124G in the intermediate-layer display panel 111G.

In the display unit 101 of FIG. 5, a terminal surface SG of the scan electrode terminal 124G in the intermediate-layer display panel 111G may be caused to face the terminal surface SR of the scan electrode terminal 124R in the lower-layer display panel 111R or be caused to face the terminal surface SB of the scan electrode terminal 1248 in the upper-layer display panel 111B. In the former case, the scan electrode terminal 124G of the intermediate-layer display panel 111G is joined to the opposing scan electrode terminal 124R of the lower-layer display panel 111R with the anisotropic conductive adhesive agent 134. In the latter case, the scan electrode terminal 124G of the intermediate-layer display panel 111G is joined to the opposing scan electrode terminal 124B of the upper-layer display panel 111B with the anisotropic conductive adhesive agent 134.

In the display unit 101 of FIG. 5, the scan electrode terminal 124B of the upper-layer display panel 111B is joined to the terminal of the scanning driver 132 with the anisotropic conductive adhesive agent 134, so that the scan electrode terminal 124B of the upper-layer display panel 111B is connected to the scanning driver 132. Therefore, the length LB of the scan electrode terminal 124B in the upper-layer display panel 111B is greater than the length LR of the scan electrode terminal 124R in the lower-layer display panel 111R. In the case of bonding the terminal of the scanning driver 132 to the lower-layer scan electrode terminal 124R in place of the upper-layer scan electrode terminal 124B, the length LB of the upper-layer scan electrode terminal 124B and the length LR of the lower-layer scan electrode terminal 124R are reversed.

In the display unit 101 of FIG. 5, the number of scanning drivers 132 used can be reduced to one in this manner. Accord 9 to this method, there is no need to go through the scan electrode 122 or the dedicated flexible printed board 141 as in the methods disclosed in Patent Document 1 and Patent Document 2 in order to supply scan voltage from the scanning driver 132 to the display panels 111. This eliminates the burden of setting a rather high scan voltage in consideration of a voltage drop due to the electric resistance of from the scanning driver 132 to the display panels 111. Further, it is also possible to eliminate the cost of preparing the dedicated flexible printed board 141. In the case of using segment-driving electrodes instead of matrix-driving electrodes for the scan electrodes 122 and the signal electrodes 123 in this method, an adhesive agent without anisotropic conductivity may be used in place of an anisotropic conductive adhesive agent as an adhesive agent for bonding the scan electrode terminals 124.

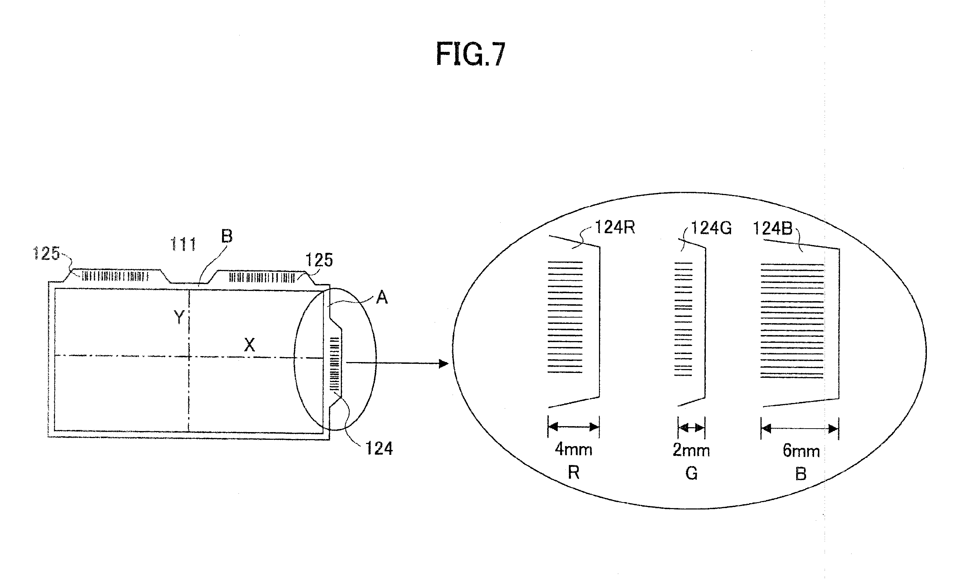

FIG. 7 is a front view of the display panel 111.

The display panel 111 has a substantially rectangular shape. One set of scan electrode terminals 124 is formed on one short side A of the four sides of the display panel 111. Two sets of signal electrode terminals 125 are formed on one long side B of the four sides of the display panel 111. The display panel 111 has substantially the same shape except for the length of the scan electrode terminal 124 in each layer. The length of the scan electrode terminal 124 is 4 mm in the lower-layer display panel 111R, 2 mm in the intermediate-layer display panel 111G, and 6 mm in the upper-layer display panel 111B, including a margin.

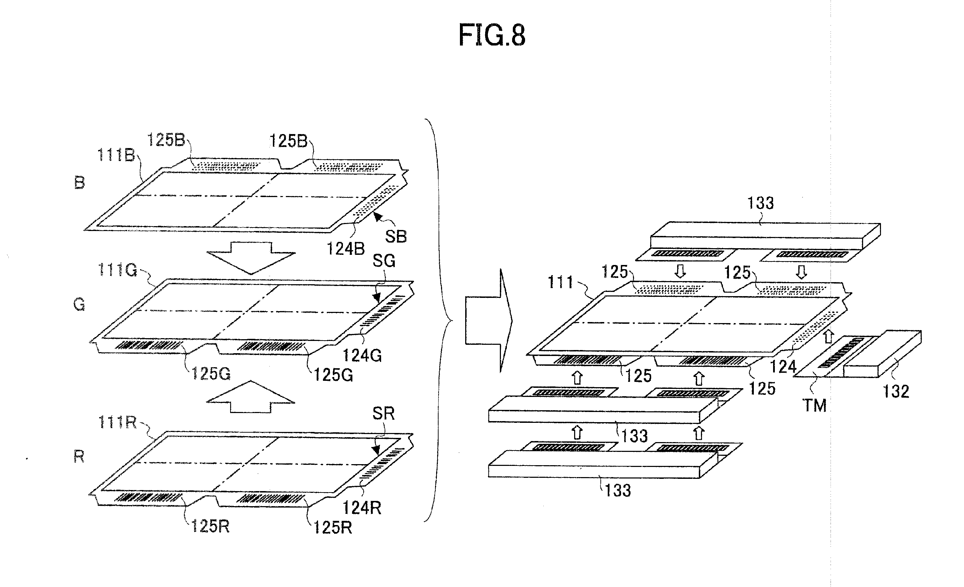

FIG. 8 is a perspective view of a laminated structure of the display panels 111.

The top-bottom orientation in the lower-layer display panel 111R and the top-bottom orientation in the upper-layer display panel 1113 are opposite to each other. As a result, it is possible to cause the terminal surface SR of the scan electrode terminal 124R in the lower-layer display panel 111R and the terminal surface SB of the scan electrode terminal 124B in the upper-layer display panel 111B to face each other.

The three display panels 111 are stacked so that the scan electrode terminals 124 of the display panels 111 are on the sides of the display panels 111 on the same side. The four sides of each display panel 111 are positioned on the right side, the left side, the front side, and the bottom side in the drawing, and the scan electrode terminals 124 of the display panels 111 are on the sides on the right side in the drawing. This makes it possible to bond the scan electrode terminals 124 of the display panels 111 to each other.

The scanning driver 132 is placed opposite to the sides of the display panels 111 on which the respective scan electrode terminals 124 are provided. That is, the scanning driver 132 is placed opposite to the right-side one of the four sides of each display panel 111 in the drawing. This makes it possible to place the scanning driver 132 in the vicinity of the sides of the display panels 111 on which the respective scan electrode terminals 124 are provided, and to bond a terminal TM of the scanning driver 132 and the scan electrode terminal 124R of the upper-layer display panel 111R to each other. Here, the term "vicinity" means a range of distances within which it is possible to bond the terminal TM of the scanning driver 132 and the scan electrode terminal 124R of the upper-layer display panel 111R to each other.

In order to make it possible to realize these, the arrangement of the scan electrode terminals 124 of the display panel 111 is axisymmetric with respect to a long axis X of the screen of the display panel 111 (FIG. 7). Further, although not related in particular to making it possible to realize these, the arrangement of the signal electrode terminals 125 of the display panel 111 is axisymmetric with respect to a short axis Y of the screen of the display panel 111 (FIG. 7).

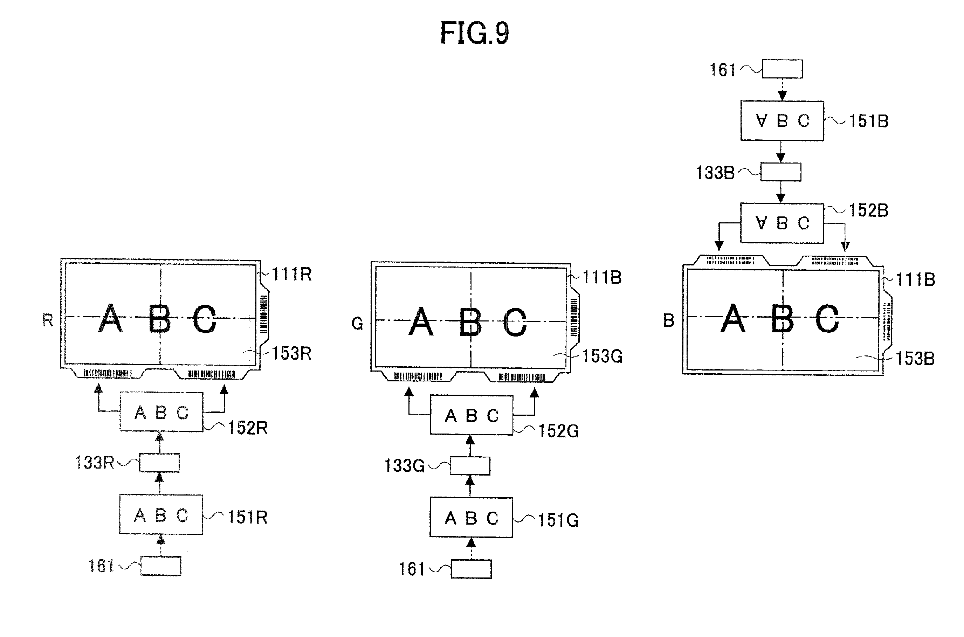

FIG. 9 is a diagram for illustrating input images and output images of the signal drivers 133.

FIG. 9 shows an "ABC" image displayed on the display unit 101. Displayed images 153R, 153G, and 153B of the display panels 111R, 111G, and 111B of their respective colors are "ABC"s of the corresponding colors. Here, it should be noted that the display panel 111R is face-up, the display panel 111G is face-up, and the display panel 111B is face-down. Accordingly, output images 152R, 152G, and 152B output from the signal drivers 133R, 133G, and 133B to the display panels 111R, 111G, and 111B should be face-up, face-up, and face-down in order to make all of the display images 153R, 153G, and 153B face up. This further requires input images 151R, 151G, and 151B input to the signal drivers 133R, 133G, and 133B to be face-up, face-up, and face-down.

Accordingly, the display unit 101 of this embodiment corrects the orientations of the input images 151 input to the signal drivers 133 with image processing ICs 161 so that the output images 152 output from the signal drivers 133 to the display panels 111 are oriented so as to match the orientation of the display image 153 in the face-up display panel 111 with the orientation of the display image 153 in the face-down display panel 111. In FIG. 9, when the orientations of the output images 152R, 152G, and 152B are face-up, face-up, and face-down, the orientations of the display images 153R, 153G, and 153B match one another. Accordingly, the orientations of the input images 151R, 151G, and 151B are corrected to be face-up, face-up, and face-down so that the output images 152R, 152G, and 152B are oriented face-up, face-up, and face-down.

In the above, a three-layer laminated structure is taken as an embodiment of the present invention. In the following, multilayer laminated structures having three or more layers are taken as variant embodiments of the present invention.

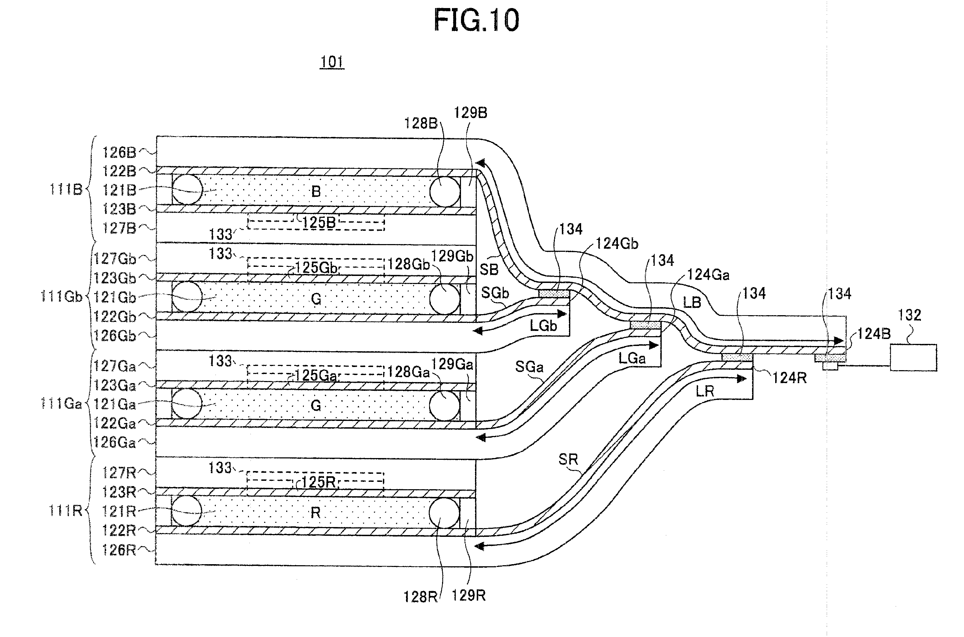

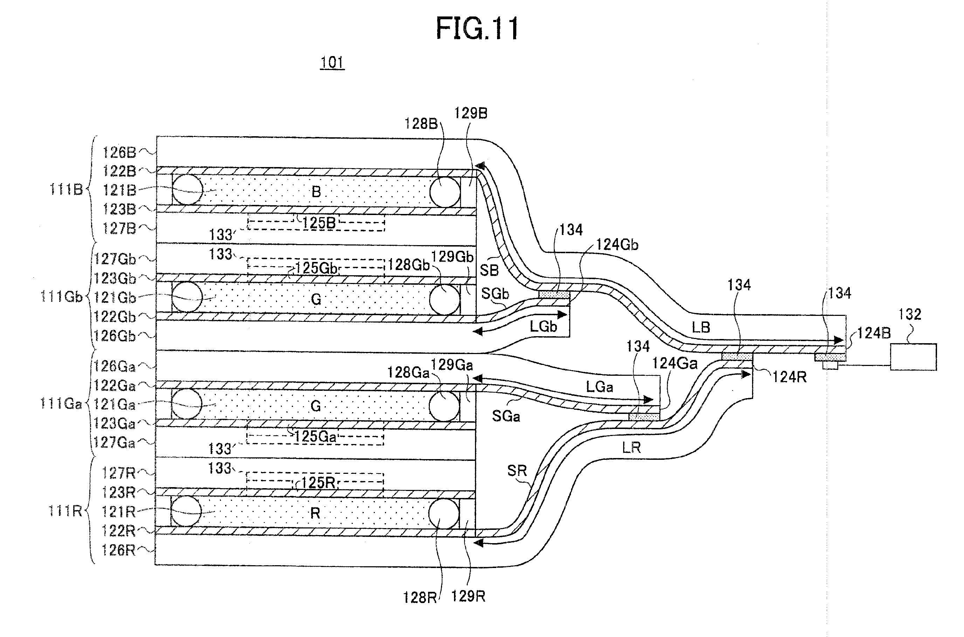

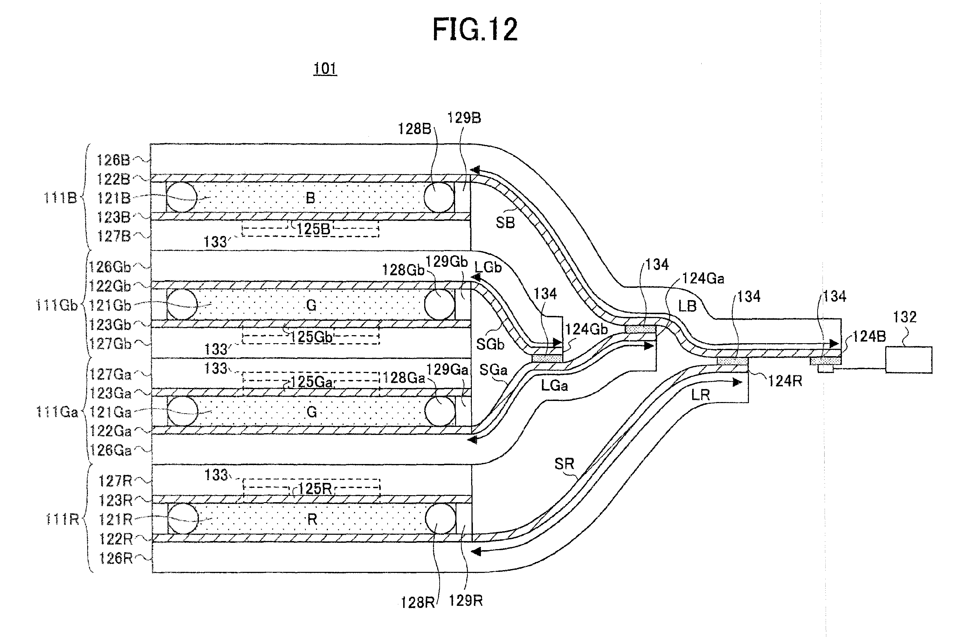

In the display units 101 of FIGS. 10, 11, and 12, the red (R) display panel 111R, a green (G) display panel 111Ga, a green (G) display panel 111Gb, and the blue (B) display panel 111B are stacked. The display panel 111R is placed at a "lower layer," which defines one end; the display panel 111B is placed at an "upper layer," which defines another end; and the display panels 111Ga and 111Gb are placed at the "intermediate layer" between the display panel 111R and the display panel 111B.

In the display unit 101 of each drawing, the terminal surface SR of the scanning electrode terminal 124R in the lower-layer display panel 111R faces the terminal surface SB of the scanning electrode terminal 124B in the upper-layer display panel 111B. This is for bonding the scan electrode terminal 124R of the lower-layer display panel 111R to the scan electrode terminal 124B of the upper-layer display panel 111B with the anisotropic conductive adhesive agent 134 as shown in each drawing. Therefore, the length LR of the scan electrode terminal 124R in the lower-layer display panel 111R and the length LB or the scan electrode terminal 124B in the upper-layer display panel 111B are both greater than lengths LGa and LGb of scan electrode terminals 124Ga and 124 in the intermediate-layer display panels 111Ga and 111Gb.

In the display unit 101 of each drawing, terminal surfaces SGa and SGb of the scan electrode terminals 124Ga and 124Gb in the intermediate-layer display panels 111Ga and 111Gb may be caused to face the terminal surface SR of the scan electrode terminal 124R in the lower-layer display panel 111R or be caused to face the terminal surface SB of the scan electrode terminal 124B in the upper-layer display panel 111B. In the former case, the scan electrode terminals 124Ga and 124Gb of the intermediate-layer display panels I11Ga and 111Gb are joined to the opposing scan electrode terminal 124R, 124Gb, or 124Ga of the lower-layer or other intermediate display panel 111R, 111Gb, or 111Ga with the anisotropic conductive adhesive agent 134. In the latter case, the scan electrode terminals 124Ga and 124Gb of the intermediate-layer display panels 111Ga and 111Gb are joined to the opposing scan electrode terminal 124B, 124Gb, or 124Ga of the upper-layer or other intermediate-layer display panel 111B, 111Gb, or 111Ga with the anisotropic conductive adhesive agent 134.

In the display unit 101 of each drawing, the scan electrode terminal 124B of the upper-layer display panel 111B is joined to the terminal of the scanning driver 132 with the anisotropic conductive adhesive agent 134, so that the scan electrode terminal 124B of the upper-layer display panel 111B is connected to the scanning driver 132. Therefore, the length LB of the scan electrode terminal 124B in the upper-layer display panel 111B is greater than the length LR of the scan electrode terminal 124R in the lower-layer display panel 111R. In the case of bonding the terminal Of the scanning driver 132 to the lower-layer scan electrode terminal 124R in place of the upper-layer scan electrode terminal 124B, the length LB of the upper-layer scan electrode terminal 124B and the length LR of the lower-layer scan electrode terminal 124R are reversed.

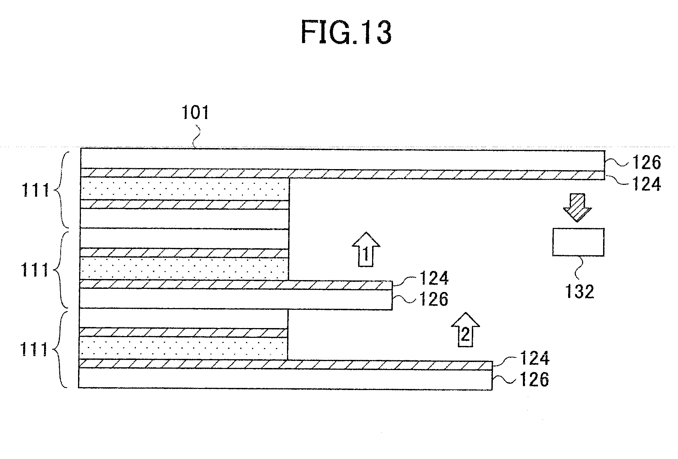

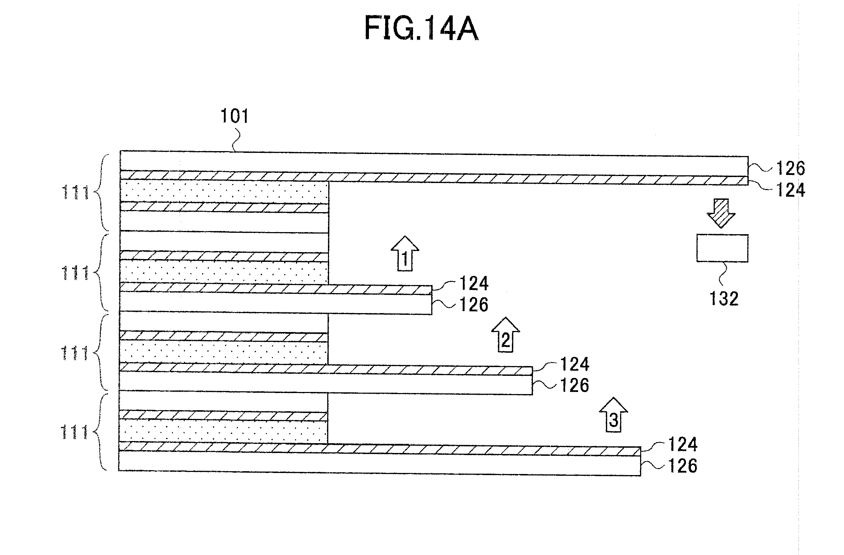

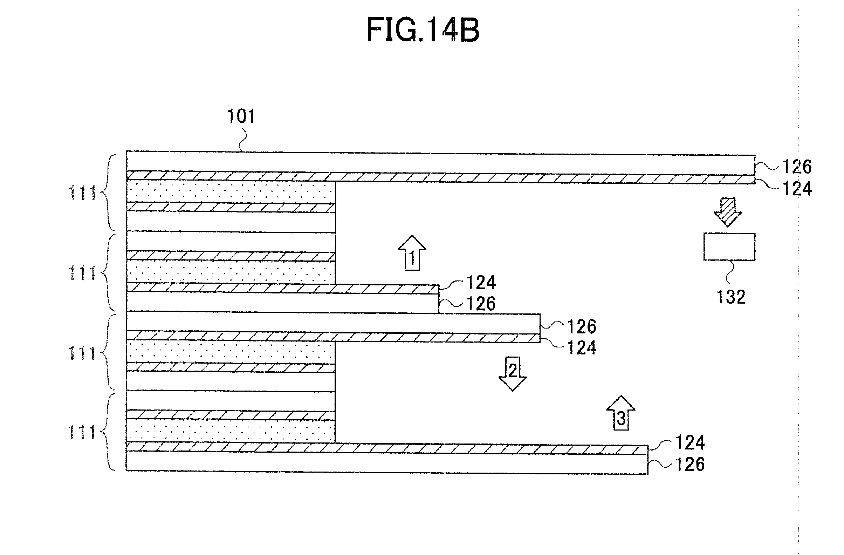

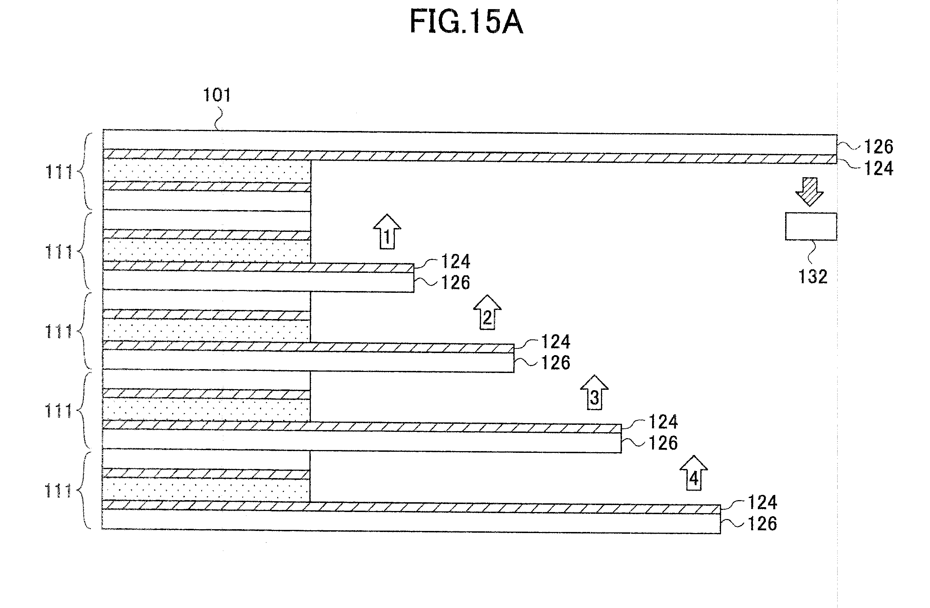

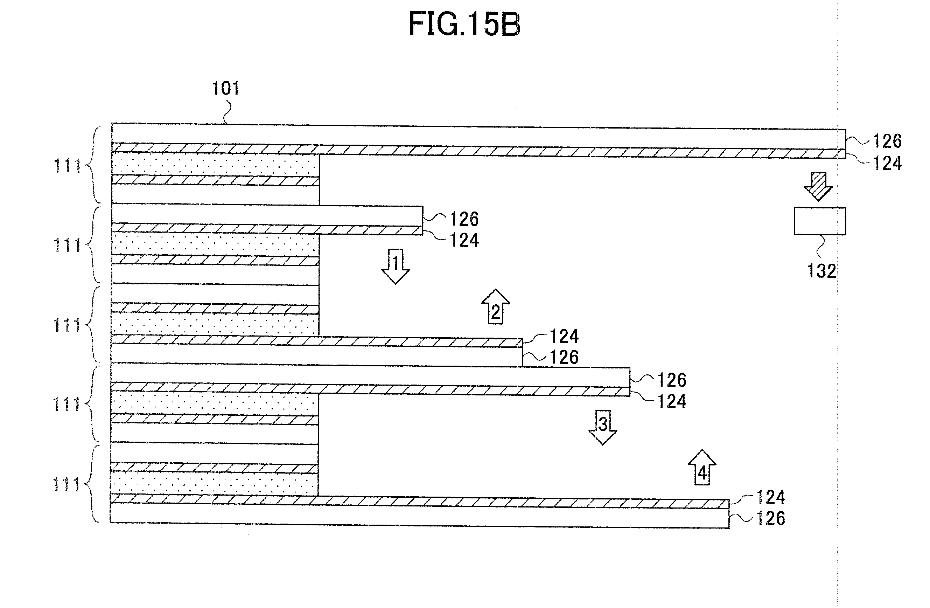

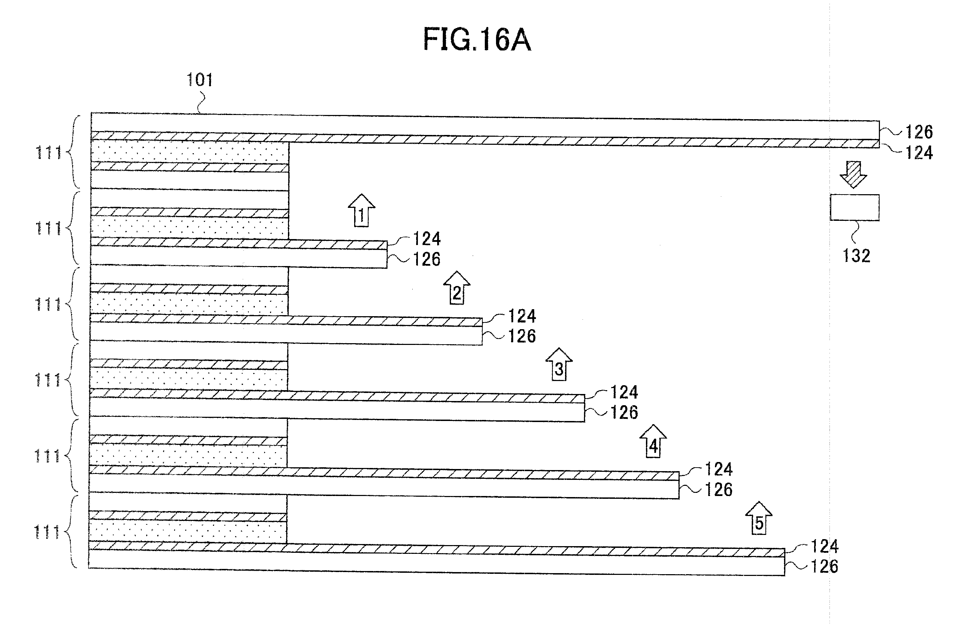

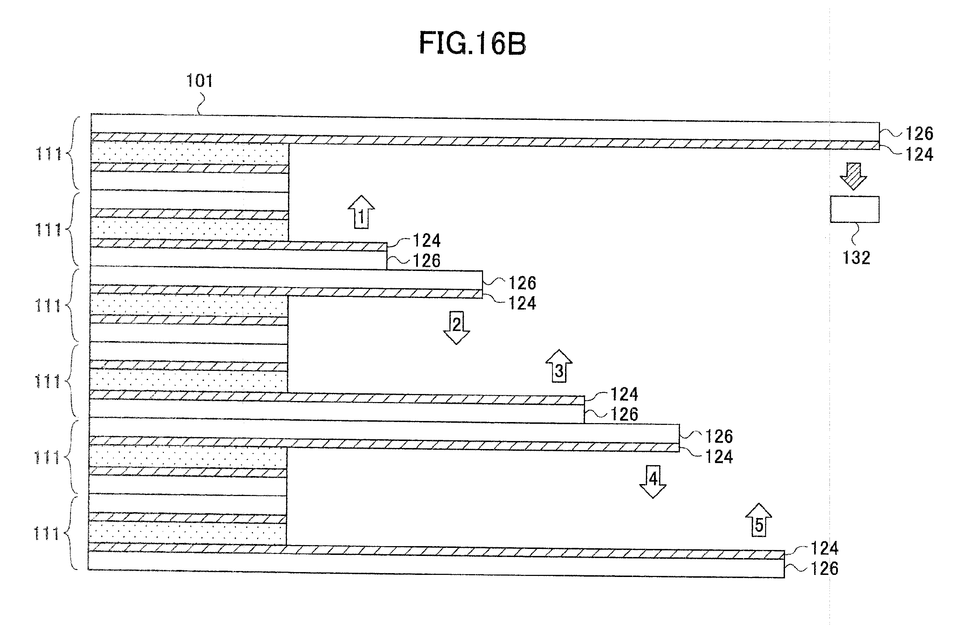

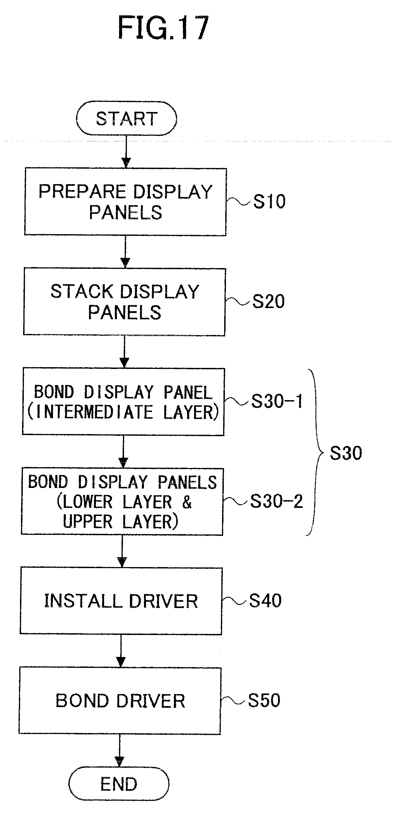

FIG. 13, FIGS. 14A and 14B, FIGS. 15A and 15B, and FIGS. 16A and 16B are diagrams illustrating methods of manufacturing the display units 101 having the display panels 101 in three layers, four layers, five layers, and six layers, respectively. FIG. 17 shows a flow of these manufacturing methods.

In each manufacturing method, the display panels 111 having the scan electrode terminals 124 whose lengths increase in the order of "each intermediate layer, the lower layer, and the upper layer" are prepared (FIG. 17, S10), the scan electrode terminals 124 of the display panels 111 are bonded to each other in the order of the numbers in arrows (FIG. 17, S30), and finally, the terminal of the scanning driver 132 is bonded (FIG. 17, S50). At the time of bonding, it is necessary to bend the scan electrode substrate 126 of the display panel 111. Since the scan electrode substrate 126 of the display panel 111 is a flexible substrate, it is possible to bend it. The particulars described with reference to FIG. 8 are applied to the top-bottom orientations and the orientations of the four sides of the display panels 111 at the time of their stacking (FIG. 17, S20) and to the placement of the scanning driver 132 at the time of its installation (FIG. 17, S40).

In the process of S30, the scan electrode terminal 124 of the intermediate-layer display panel 111 is bonded to the scan electrode terminal 124 of the lower-layer, upper-layer, or ether intermediate-layer display panel 111 (S30-1), and finally, the scan electrode terminal 124 of the lower-layer display panel 111 is bonded to the scan electrode terminal 124 of the upper-layer display panel 111 (S30-2) .

The present invention is not limited to the specifically disclosed embodiments, and variations and embodiments may be conceived without departing from the scope of the present invention claimed in CLAIMS.

## Claims

1. A display unit having a stacked display panel, the display unit comprising:
a first end display panel placed at one end;
a second end display panel placed at another end; and
one or more internal display panels placed between the first end display panel and the second end display panel,
wherein the first end display panel includes a scan electrode terminal longer than scan electrode terminals of the internal display panels, and the second end display panel includes a scan electrode terminal longer than the scan electrode terminal of the first end display panel, and
a terminal surface of the scan electrode terminal in the first end display panel faces a terminal surface of the scan electrode terminal in the second end display panel; the scan electrode terminal of each of the internal display panels is joined to the scan electrode terminal of one of the first end display panel, the second end display panel, and another one of the internal display panels; the scan electrode terminal of the first end display panel is joined to the scan electrode terminal of the second end display panel; and the scan electrode terminal of the second end display panel is connected to a scanning driver circuit.

2. The display unit as claimed in claim 1, wherein, the display panels of the display unit are stacked so that the scan electrode terminals are on sides of the display panels on a same side.

3. The display unit as claimed in claim 2,
wherein the scanning driver circuit is placed opposite to the sides of the display panels on which sides the scan electrode terminals thereof are provided.

4. The display unit as claimed in claim 2, wherein the scanning driver circuit is placed in a vicinity of the sides of the display panels on which sides the scan electrode terminals thereof are provided.

5. The display unit as claimed in claim 1, wherein each of the display panels comprises:
a display layer;
a scan electrode for applying a scan voltage to the display layer;
a signal electrode for applying a signal voltage to the display layer;
the scan electrode terminal for connecting the scan electrode and the scanning driver circuit;
a signal electrode terminal for connecting the signal electrode and a signal driver circuit;
a scan electrode substrate having the scan electrode and the scan electrode terminal formed thereon; and
a signal electrode substrate having the signal electrode and the signal electrode terminal formed thereon.

6. The display unit as claimed in claim 5, wherein input images input to the signal driver circuits are corrected so that output images output from the signal driver circuits to the display panels are oriented so as to match an orientation of a display image in one of the display panels in a face-up position with an orientation, of a display image in another one of the display panels in a face-down position.

7. The display unit as claimed in claim 5, wherein the scanning driver circuit or the signal driver circuits are TCP (Tape Carrier Package).

8. The display unit as claimed in claim 5, wherein the scan electrode substrates or the signal electrode substrates are flexible substrates.

9. The display unit as claimed in claim 5, wherein the scan electrodes and the signal electrodes are matrix-driving electrodes.

10. The display unit as claimed in claim 5, wherein the scan electrodes and the signal electrodes are segment-driving electrodes.

11. The display unit as claimed in claim 5, wherein the display layers are reflection-type display layers.

12. The display unit as claimed in claim 5, wherein the display layers are display layers having a memory characteristic.

13. The display unit as claimed in claim 5, wherein the display layers are display layers formed of a liquid crystal forming a cholesteric phase.

14. A method of manufacturing a display unit having a stacked display panel, the display unit including a first end display panel placed at one end; a second end display panel placed at another end; and one or more internal display panels placed between the first end display panel and the second end display panel, the first end display panel including a scan electrode terminal longer than scan electrode terminals of the internal display panels, the second end display panel including a scan electrode terminal longer than the scan electrode terminal of the first end display panel, the method comprising:
causing a terminal surface of the scan electrode terminal in the first end display panel to face a terminal surface of the scan electrode terminal in the second end display panel; joining the scan electrode terminal of each of the internal display panels to the scan electrode terminal of one of the first end display panel, the second end display panel, and another one of the internal display panels; joining the scan electrode terminal of the first end display panel to the scan electrode terminal of the second end display panel; and connecting the scan electrode terminal of the second end display panel to a scanning driver circuit.

15. The method of manufacturing the display unit as claimed in claim 14, further comprising:
stacking the display panels of the display unit so that the scan electrode terminals are on sides of the display panels on a same side.

16. The method of manufacturing the display unit as claimed, in claim 14, further comprising:
placing the scanning driver circuit opposite to the sides of the display panels on which sides the scan electrode terminals thereof are provided.

17. The method of manufacturing the display unit as claimed in claim 14, further comprising:
placing the scanning driver circuit in vicinity of the sides of the display panels on which sides the scan electrode terminals thereof are provided.
